# EUROPÄISCHE PATENTSCHRIFT

(11) **EP 2 481 945 B1**
(45) Veröffentlichungstag und Bekanntmachung des Hinweises auf die Patenterteilung: **26.12.2012**
(21) Anmeldenummer: 11152393.2
(22) Anmeldetag: 27.01.2011
(51) Int. Cl.: F16F 9/06

(54) **Federungseinrichtung für Fahrzeuge**
Suspension device for vehicles
Dispositif d'amortissement pour véhicules

(43) Veröffentlichungstag der Anmeldung: 01.08.2012
(73) Patentinhaber: HEMSCHEIDT FAHRWERKTECHNIK GmbH & Co. KG, 42781 Haan-Gruiten (DE)
(72) Erfinder: Runkel, Walter, 53547, Leubsdorf (DE)
(74) Vertreter: Patentanwälte Dr. Solf & Zapf

(56) Entgegenhaltungen:
- EP-A1- 1 745 951
- US-A- 4 257 581
- US-A- 5 465 811
- US-A1- 2006 027 954
- US-B2- 7 140 601

## Beschreibung

Die vorliegende Erfindung betrifft gemäß dem Oberbegriff des Anspruchs 1 eine Federungseinrichtung zur eine Last tragenden und federnden Rad-Abstützung in einem Fahrzeug, bestehend aus einem zum Einfedern und Ausfedern linear teleskopisch längenvariablen Federzylinder mit zwei in Längsrichtung in Reihe angeordneten Federstufen, und zwar einem Hauptzylinder als erste Federstufe und einem Zusatzzylinder als zweite Federstufe, wobei in dem Zusatzzylinder ein Zusatzkolben mit einer nach außen geführten Zusatzkolbenstange geführt ist, und wobei innerhalb des Zusatzzylinders der Zusatzkolben zum Ausfedern mit einem - von einem zumindest anteilig innerhalb des Zusatzzylinders enthaltenen, elastisch kompressiblen, pneumatischen Druckmedium erzeugten - Federdruck beaufschlagt ist.

Eine Federungseinrichtung dieser gattungsgemäßen Art ist in dem Dokument EP 1 745 951 B1 offenbart. Bei dieser bekannten Ausführung ist der die zweite Federstufe bildende Zusatzzylinder derart im freien Endbereich einer Kolbenstange des die erste Federstufe bildenden Teleskop-Hauptzylinders angeordnet, dass die Kolbenstange über den Zusatzzylinder teleskopartig längenvariabel ist. Hierbei ist der Zusatzzylinder unmittelbar mit dem Druck eines pneumatischen Federmediums beaufschlagt. Häufig wird heute als pneumatisches Druckmedium Stickstoff eingesetzt, weshalb zur Abdichtung sehr aufwändige Gasdichtungen erforderlich sind. Dies führt zudem zu einer hohen Reibung bei den Federungsbewegungen zwischen den sich relativ zueinander bewegenden Teilen.

Der vorliegenden Erfindung liegt die Aufgabe zu Grunde, eine Federungseinrichtung der beschriebenen Art zu schaffen, die mit konstruktiv einfachen und daher kostengünstigen Mitteln verbesserte Gebrauchseigenschaften bietet.

Erfindungsgemäß wird diese Aufgabe mit einer Federungseinrichtung mit den Merkmalen des unabhängigen Anspruchs 1 gelöst. Vorteilhafte Weiterbildungen der Erfindung sind in den abhängigen Ansprüchen und der anschließenden Beschreibung enthalten.

Demnach ist erfindungsgemäß vorgesehen, dass der Zusatzkolben derart mittelbar über ein sich zusätzlich zu dem pneumatischen Druckmedium innerhalb des Zusatzzylinders befindendes Hydraulikmedium mit dem Federdruck beaufschlagt ist, dass zwischen dem Zusatzzylinder und einerseits dem Zusatzkolben und andererseits der Zusatzkolbenstange angeordnete Umfangsdichtungen von dem pneumatischen Druckmedium über das Hydraulikmedium getrennt sind. Dies bedeutet mit anderen Worten, dass alle Dichtungen nur von dem Hydraulikmedium beaufschlagt werden. Deshalb können die Umfangsdichtungen im Vergleich zu sonst erforderlichen GasDichtungen sehr viel einfacher zur Flüssigkeitsabdichtung ausgelegt sein. Dies allein trägt bereits zur Reduzierung der Reibung im Dichtungsbereich bei. Die Reibung wird zudem noch weitergehend dadurch reduziert, dass durch die Beaufschlagung mit dem Hydraulikmedium eine Schmierung im Bereich der Dichtungen erreicht wird. Die konstruktiv vereinfachten Dichtungen führen demnach auch zu deutlich verbesserten Gebrauchseigenschaften der erfindungsgemäßen Federungseinrichtung.

In bevorzugter Ausgestaltung der Erfindung sind in einer bestimmungsgemäßen Einbaulage des Federzylinders die erste Federstufe in einem vertikal oberen Bereich und die zweite Federstufe in einem vertikal unteren Bereich angeordnet. Dabei ist dann innerhalb des Zusatzzylinders ein Füllrohr angeordnet, welches sich zentrisch und axial durch das sich schwerkraftbedingt in einem unteren Bereich befindende Hydraulikmedium hindurch mit einem oberen Ende bis in den Bereich des sich oberhalb des Hydraulikmediums befindenden pneumatischen Druckmediums erstreckt. Ein unteres Ende des Füllrohrs geht in einen Füllanschluss über, der im unteren Bereich des Federzylinders vorgesehen ist. Der Füllanschluss weist zweckmäßig ein Füllventil nach Art eines Reifen-Druckluftventils auf.

Durch diese beschriebene, vorteilhafte Ausgestaltung kann auf einfache Weise der pneumatische Federdruck durch Zuführen oder Ablassen von Gas eingestellt werden, ohne dass beim Ablassen auch Hydraulikmedium entweichen könnte, und ohne dass beim Zuführen das Gas frei durch das Hydraulikmedium hindurch geleitet werden müsste. Über den Füllanschluss und das Füllrohr kann zudem auch nach der mechanischen Fertigung und Montage des Federzylinders das erforderliche Volumen des Hydraulikmediums eingefüllt werden, bevor abschließend das pneumatische Druckmedium mit dem gewünschten Federdruck eingefüllt wird. Das Druckmedium wirkt dann unmittelbar, d. h. ohne ein Trennelement, wie eine Membran oder einen frei beweglichen Trennkolben, auf das Hydraulikmedium und mittelbar über das Hydraulikmedium auf den Zusatzkolben in dessen Ausfederungsrichtung, so dass ein Einfedern gegen den Federdruck und ein Ausfedern durch die Wirkung des Federdrucks erfolgt.

Anhand von in der Zeichnung veranschaulichten, bevorzugten Ausführungsbeispielen soll die Erfindung genauer erläutert werden. Es zeigen:
- Fig. 1: eine erste Ausführungsform einer erfindungsgemäßen Federungseinrichtung in Axialschnittdarstellung der Komponenten, und zwar in einem beispielhaften Federungszustand der Federstufen,
- Fig. 2: die Federungseinrichtung gemäß Fig. 1 in einer statischen, sich durch Belastung mit einer bestimmten Gewichtskraft einstellenden Lage,
- Fig. 3: die Federungseinrichtung gemäß Fig. 1 und 2 in einem aus der statischen Lage gemäß Fig. 2 heraus vollständig ausgefederten Zustand,
- Fig. 4: die Federungseinrichtung gemäß Fig. 1 bis 3, jedoch in einem aus der statischen Lage gemäß Fig. 2 heraus vollständig eingefederten Zustand, und
- Fig. 5 bis 7: Darstellungen analog zu Fig. 2 bis 4 einer zweiten Ausführungsform der erfindungsgemäßen Federungseinrichtung.

In den verschiedenen Figuren der Zeichnung sind gleiche bzw. sich funktionell entsprechende Teile und Komponenten stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

Eine erfindungsgemäße Federungseinrichtung 1 besteht aus - mindestens - einem Federzylinder 2, der zum Einfedern und Ausfedern linear teleskopisch längenvariabel ausgebildet ist. Ein solcher Federzylinder 2 wird häufig auch als "Federbein" bezeichnet. Der Federzylinder 2 ist zur direkten Anordnung zwischen einer ungefederten Masse, d. h. einem Fahrzeugrad bzw. einer Achse, und einer gefederten Masse, einem Fahrzeugrahmen bzw. einem Karosserieaufbau, vorgesehen. Dazu weist der Federzylinder 2 an seinen gegenüberliegenden, voneinander entfernten Enden geeignete Montageelemente 4, 6 auf, die als so genannte Lageraugen ausgebildet sein können.

Der Federzylinder 2 ist zweifach teleskopisch längenvariabel und besteht dazu aus zwei in Längsrichtung in Reihe hintereinander angeordneten Federstufen A und B, und zwar einem Hauptzylinder 8 als erste Federstufe A und einem Zusatzzylinder 10 als zweite Federstufe B.

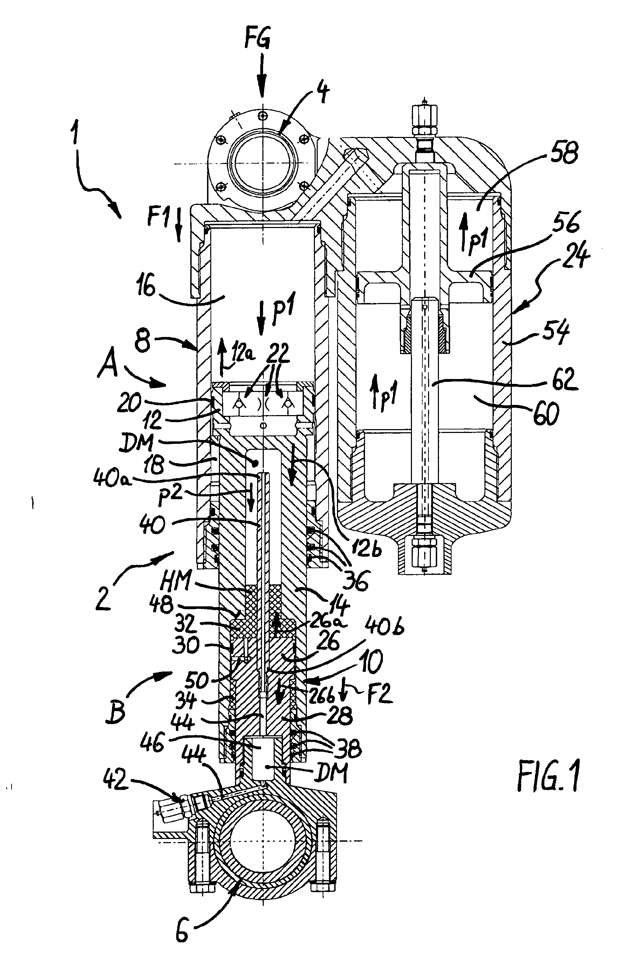

In dem Hauptzylinder 8 ist ein Hauptkolben 12 zum Einfedern und Ausfedern linear beweglich geführt. Das Einfedern ist in Fig. 1 mit einem Pfeil 12a veranschaulicht und das Ausfedern mit einem Pfeil 12b. Der Hauptkolben 12 ist mit einer aus dem Hauptzylinder 8 umfangsgemäß abgedichtet herausgeführten Hauptkolbenstange 14 verbunden. Der Hauptkolben 12 teilt innerhalb des Hauptzylinders 8 zwei mit einem Hydraulikmedium gefüllte Arbeitsräume 16, 18 voneinander ab, und zwar einen Zylinderraum 16 von einem die Hauptkolbenstange 14 umschließenden Ringraum 18. Zur Trennung der Arbeitsräume 16, 18 weist der Hauptkolben 12 auf seinem Außenumfang eine Kolbenringdichtung 20 auf, die dichtend auf der Innenwandung des Hauptzylinders 8 aufliegt. Hierbei sind die Arbeitsräume 16, 18 hydraulisch insbesondere über eine Dämpfungsventilanordnung 22 des Hauptkolbens 12 miteinander verbunden.

Grundsätzlich kann der Hauptzylinder 8 mit einer mechanischen Feder zusammenwirken. In den dargestellten, bevorzugten Ausführungen ist allerdings der Hauptkolben 12 zum Ausfedern mit einem Federdruck p1 eines hydropneumatischen Druckspeichers 24 beaufschlagt. Dazu ist der Zylinderraum 16 hydraulisch mit dem Druckspeicher 24 verbunden. Der Federdruck p1 bewirkt durch Beaufschlagung der effektiven Kolbenfläche nach der Gleichung F = p · A eine Tragkraft F1 des Hauptzylinders 8.

Was nun die zweite Federstufe B betrifft, so ist in dem Zusatzzylinder 10 in analoger Weise ein Zusatzkolben 26 zum Einfedern (Pfeil 26a in Fig. 1) und Ausfedern (Pfeil 26b) linear beweglich geführt. Der Zusatzkolben 26 ist mit einer umfangsgemäß abgedichtet aus dem Zusatzzylinder 10 nach außen geführten Zusatzkolbenstange 28 verbunden. Auch der Zusatzkolben 26 weist auf seinem Außenumfang eine Kolbenringdichtung 30 auf, so dass der Zusatzkolben 26 innerhalb des Zusatzzylinders 10 zwei Arbeitsräume voneinander abteilt, und zwar einen Zylinderraum 32 von einem die Zusatzkolbenstange 28 umschließenden Ringraum 34 (siehe dazu insbesondere Fig. 1).

Der Zusatzkolben 26 ist nun innerhalb des Zusatzzylinders 10 zum Ausfedern mit einem Federdruck p2 beaufschlagt. Dieser Federdruck p2 wird von einem elastisch kompressiblen, pneumatischen Druckmedium DM erzeugt, welches - zumindest anteilig - innerhalb des Zusatzzylinders 10 enthalten ist. Der Federdruck p2 bewirkt durch Beaufschlagung der effektiven Kolbenfläche des Zusatzkolbens 26 nach der Gleichung F = p · A eine Kraft F2 in Ausfederungsrichtung, wobei ein Einfedern gegen diese elastische Kraft F2 erfolgt und ein Ausfedern durch diese Kraft F2 bewirkt wird.

An dieser Stelle sei noch erwähnt, dass zur umfangsgemäßen Abdichtung der aus dem Hauptzylinder 8 geführten Hauptkolbenstange 14, d. h. zur Abdichtung eines im Durchführungsbereich zwischen der Hauptkolbenstange 14 und dem Hauptzylinder 8 gebildeten Ringspaltes Umfangsdichtungen 36 vorgesehen sind. In analoger Weise sind auch zur Abdichtung zwischen der Zusatzkolbenstange 28 und dem Zusatzzylinder 10 Umfangsdichtungen 38 angeordnet.

Erfindungsgemäß ist nun vorgesehen, dass in der mit dem pneumatischen Druckmedium DM beaufschlagten zweiten Federstufe B der Zusatzkolben 26 derart mittelbar über ein sich zusätzlich zu dem pneumatischen Druckmedium DM innerhalb des Zusatzzylinders 10 befindendes Hydraulikmedium HM mit dem Federdruck p2 beaufschlagt ist, dass alle vorhandenen Umfangsdichtungen, und zwar einerseits die Kolbenringdichtung 30 und andererseits die Umfangsdichtungen 38, von dem pneumatischen Druckmedium DM über das Hydraulikmedium HM getrennt sind. Wie schon einleitend erläutert wurde, werden somit erfindungsgemäß alle Dichtungen 30, 38 nur von dem Hydraulikmedium HM beaufschlagt. Hierdurch wird die Druckabdichtung vereinfacht und die Reibung reduziert.

Es sei bemerkt, dass grundsätzlich die relative Anordnung und Ausrichtung der Federstufen A und B bezogen auf die Raum-Vertikale beliebig ist.

In den dargestellten, bevorzugten Ausführungsformen sind allerdings in einer bestimmungsgemäßen Einbaulage des Federzylinders 2 in einem Fahrzeug die erste Federstufe A in einem vertikal oberen Bereich und die zweite Federstufe B in einem vertikal unteren Bereich angeordnet. Hierbei ist der Hauptzylinder 8 so ausgerichtet, dass die mit dem Hauptkolben 12 verbundene Hauptkolbenstange 14 nach unten herausgeführt ist, wobei das gegenüberliegende, obere Ende des Hauptzylinders 8 das obere Montageelement 4 aufweist.

Weiterhin ist bevorzugt vorgesehen, dass auch bezüglich der zweiten Federstufe B die mit dem Zusatzkolben 26 verbundene Zusatzkolbenstange 28 nach unten aus dem Zusatzzylinder 10 geführt ist. Hierbei ist die Zusatzkolbenstange 28 mit ihrem freien unteren Ende mit dem unteren Montageelement 6 verbunden.

Diese bevorzugte Ausführung hat zunächst den Vorteil, dass die Hauptkolbenstange 14 im Bereich ihres freien unteren Endes durch eine ausgehend vom freien Ende hohle Ausbildung unmittelbar als der den Zusatzkolben 26 mit der Zusatzkolbenstange 28 aufnehmende Zusatzzylinder 10 ausgebildet sein kann.

Alternativ wäre natürlich auch eine jeweils umgekehrte Ausrichtung des Hauptzylinders 8 und/oder des Zusatzzylinders 10 möglich.

In weiterer vorteilhafter Ausgestaltung ist innerhalb des Zusatzzylinders 10 ein Füllrohr 40 zentrisch und axial angeordnet, welches sich axial durch das sich schwerkraftbedingt in einem unteren Bereich befindende Hydraulikmedium HM hindurch mit einem oberen Ende 40a bis in den Bereich des sich oberhalb des Hydraulikmediums HM befindenden pneumatischen Druckmediums DM erstreckt. Ein unteres Ende 40b des Füllrohrs 40 geht in einen Füllanschluss 42 über, der im unteren Bereich des Federzylinders 2, insbesondere im Bereich des unteren Montageelementes 6, angeordnet und zweckmäßig mit einem Füllventil ausgestattet ist. Die Zusatzkolbenstange 28 und gegebenenfalls der Zusatzkolben 26 weisen einen inneren, von dem Füllanschluss 42 ausgehenden und in das auf der Seite des Zusatzkolbens 26 angeordnete Füllrohr 40 übergehenden Füllkanal 44 auf. Vorzugsweise kann im Bereich dieses Füllkanals 44 eine kammerartige Erweiterung 46 zur Vergrößerung des Gesamtvolumens des pneumatischen Druckmediums DM vorgesehen sein. Zudem könnte zusätzlich über den Füllanschluss 42 ein externer Zusatzspeicher zur Vergrößerung des Gesamtvolumens des Druckmediums DM angeschlossen sein. Das Gesamtvolumen beeinflusst die Federkennlinie des als pneumatische Feder wirkenden Druckmediums DM.

In weiterer vorteilhafter Ausgestaltung ist innerhalb des Zusatzzylinders 10 ausgehend von dem den Zusatzkolben 26 aufnehmenden Raum durch eine Verengung des inneren Querschnitts eine Ringstufe 48 als Einfederungsanschlag für den Zusatzkolben 26 gebildet. In diesem Zusammenhang ist das Hydraulikmedium HM mit einem solchen Volumen im Zusatzzylinder 10 enthalten, dass sich das pneumatische Druckmedium DM hauptsächlich im verengten Zylinderbereich befindet, abgesehen von der kammerartigen Erweiterung 46 im Bereich des Füllkanals 44.

Da sich erfindungsgemäß der Zusatzkolben 26 auf beiden Seiten im Hydraulikmedium HM befindet, sind die beiden Arbeitsräume 32, 34 hydraulisch miteinander verbunden. Dazu ist in der ersten Ausführungsform gemäß Fig. 1 bis 4 vorgesehen, dass der Zusatzkolben 26 mindestens eine kanalartige Passage 50 zur hydraulischen Verbindung der Arbeitsräume 32, 34 aufweist.

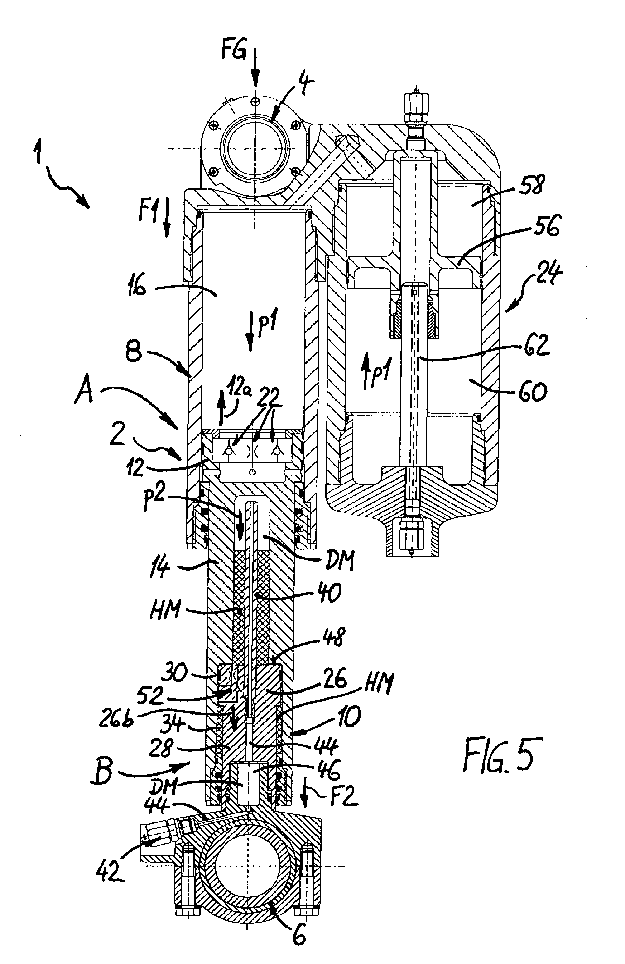

Bei der alternativen Ausführung gemäß Fig. 5 bis 7 erfolgt die hydraulische Verbindung zwischen den Arbeitsräumen 32, 34 des Zusatzzylinders 10 über eine Dämpfungsventilanordnung 52 des Zusatzkolbens 26. Dadurch wird auch im Bereich der zweiten Federstufe B eine hydraulische Dämpfung zusätzlich zu der Dämpfungsventilanordnung 22 der ersten Federstufe A bewirkt. Im Übrigen entspricht die zweite Ausführungsform der Fig. 5 bis 7 genau der ersten Ausführung gemäß Fig. 1 bis 4.

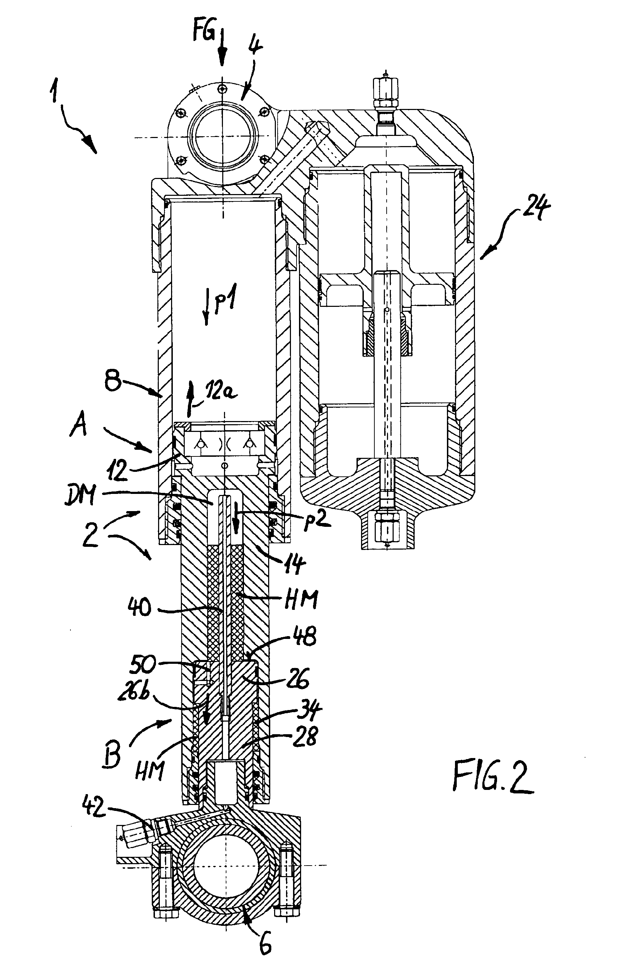

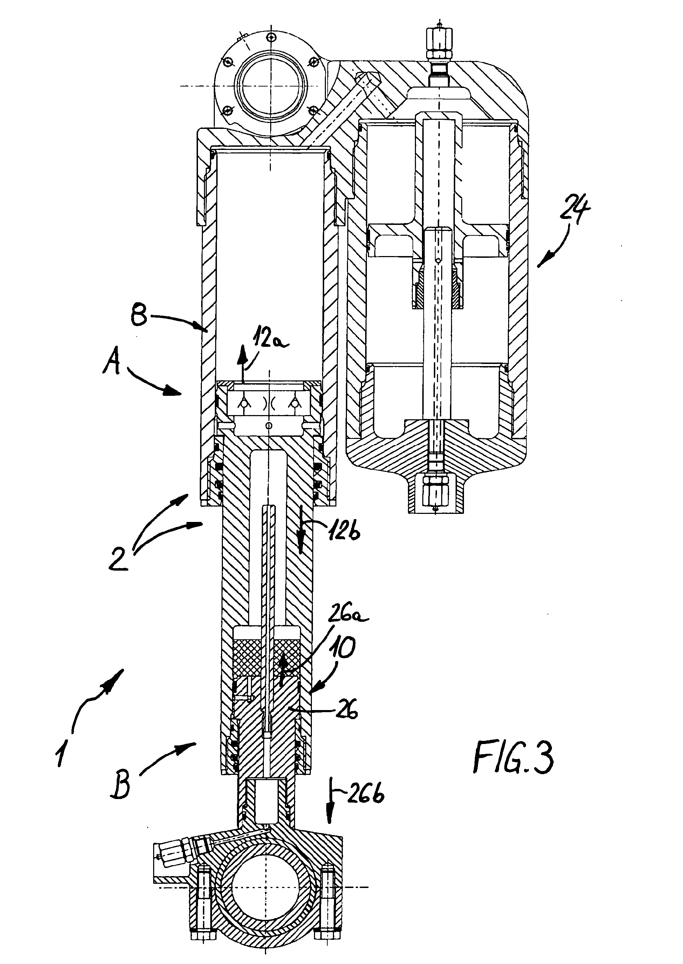

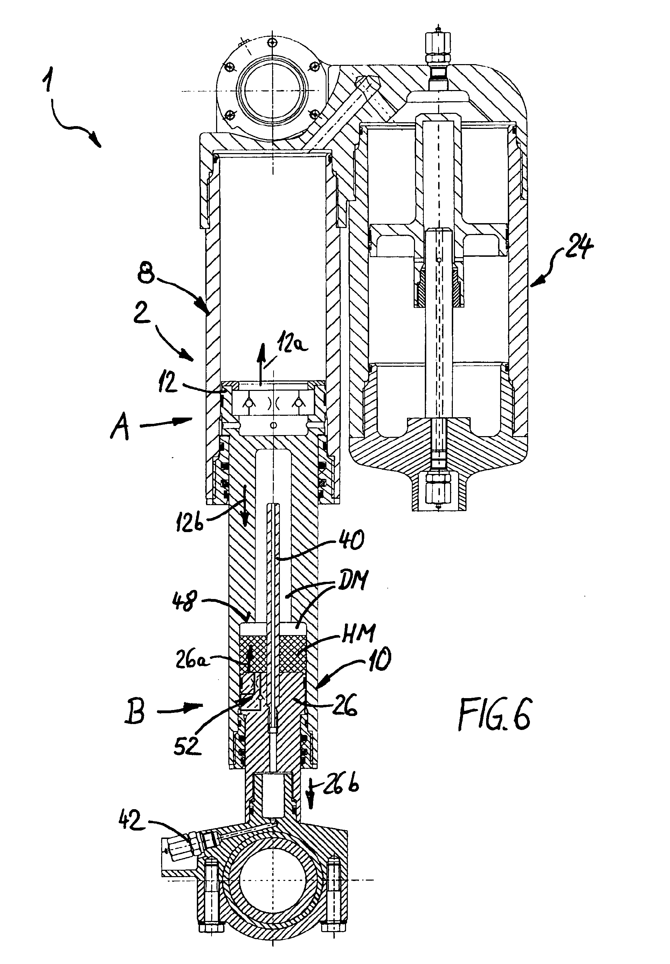

Bei den dargestellten, bevorzugten Ausführungsformen ist weiterhin vorgesehen, die wirksamen Druck- und Flächenverhältnisse innerhalb der beiden Federstufen A, B in Abhängigkeit von einer den Federzylinder 2 insgesamt beaufschlagenden Gewichtskraft FG so auszulegen, dass in einem statischen, nur mit der Gewichtskraft FG beaufschlagten Zustand einerseits die erste Federstufe A in einer Ausfederungsendstellung und andererseits die zweite Federstufe B in einer Einfederungsendstellung stehen. Diese statische Lage ist einerseits für die erste Ausführung in Fig. 2 und andererseits für die zweite Ausführung in Fig. 5 dargestellt. Ausgehend von dieser statischen Lage erfolgt ein dynamisches Einfedern nur im Bereich der ersten Federstufe A (Pfeil 12a) und ein dynamisches Ausfedern nur in der zweiten Federstufe B (Pfeil 26b). Die Ausfederungsendstellung mit maximaler Länge des Federzylinders 2 ist jeweils in Fig. 3 und 6 veranschaulicht. In dieser Ausfederungsendstellung kann - wie dargestellt - ein Teilvolumen des pneumatischen Druckmediums DM in dem erweiterten Bereich des den Zusatzkolben 26 aufnehmenden Zylinderraum 32 angeordnet sein, jedenfalls aber oberhalb des Hydraulikmediums HM.

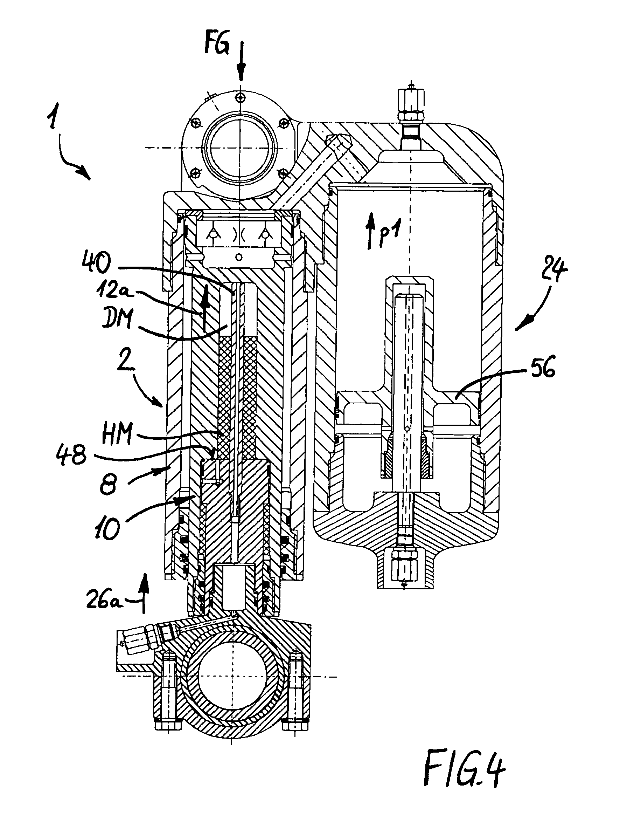

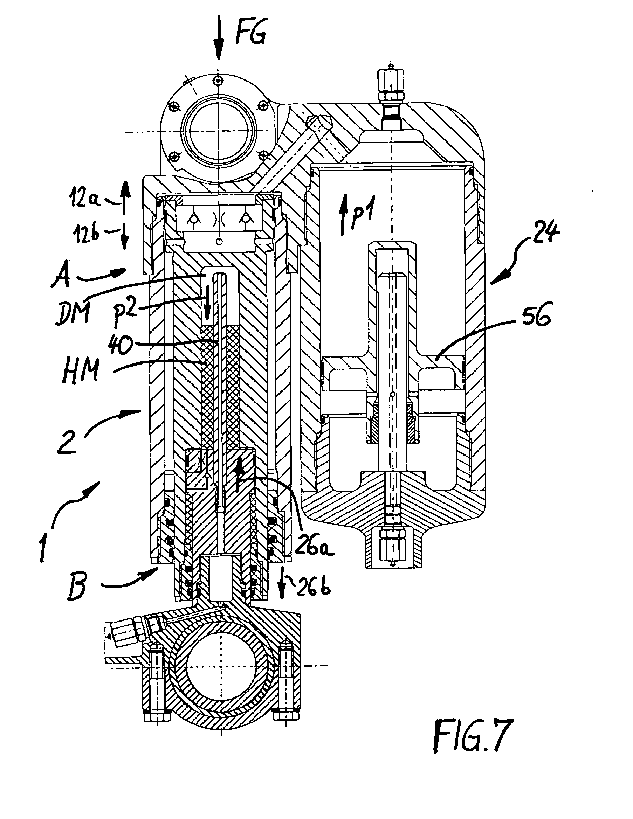

Die maximale Einfederungsendlage mit minimal möglicher Länge des Federzylinders 2 ist jeweils in Fig. 4 und 7 dargestellt.

Bei dieser bevorzugten Auslegung für die spezielle statische Lage gemäß Fig. 2 und 5 kann die in Fig. 1 dargestellte Stellung der beiden Federstufen A, B in der Praxis nicht auftreten, weil nach einem dynamischen Einfedern der ersten Stufe A erst diese Stufe A wieder ganz bis in die statische Lage ausfedert, bevor über die statische Lage hinweg ein Ausfedern in der Stufe B erfolgen kann. Entsprechendes gilt umgekehrt auch für den Vorgang beim dynamischen Ausfedern und einem anschließenden Einfedern über die statische Lage hinaus.

Was noch den oben nur allgemein erwähnten hydropneumatischen Druckspeicher 24 betrifft, so ist dessen konkrete Ausgestaltung für die vorliegende Erfindung eigentlich nicht von Belang. Vorzugsweise ist aber der Druckspeicher 24 als Kolbenspeicher ausgebildet, der aus einem Speichergehäuse 54 und einem in dem Speichergehäuse 54 schwimmend, frei in Richtung einer Bewegungsachse verschiebbar geführten Trennkolben 56 besteht, der einen Speicherraum 58 von einem mit einem kompressiblen Medium gefüllten Druckraum 60 trennt. Der Speicherraum 58 ist mit dem Zylinderraum 16 des Federzylinders 2 verbunden und deshalb ebenfalls mit dem Hydraulikmedium gefüllt. Somit wird der Hauptkolben 12 mittelbar über das Hydraulikmedium und den Trennkolben 56 mit dem Druck p1 des sich im Druckraum 60 befindenden Federmediums beaufschlagt. Bei der dargestellten Ausführung ist zudem der Trennkolben 56 auf einem länglichen, axial innerhalb des Speichergehäuses 54 befestigten Führungselement 62 geführt. Zu dieser besonderen Ausgestaltung wird auf die europäische Patentanmeldung EP 09168192 verwiesen. Bevorzugt ist der Druckspeicher 24 mechanisch starr mit dem Federzylinder 2 bzw. dem Hauptzylinder 8 verbunden, wobei er seitlich parallel neben dem Hauptzylinder 8 angeordnet ist.

Beispielhaft sei noch bemerkt, dass die erste Federstufe A für einen axialen Federweg im Bereich von 270 bis 350 mm, insbesondere 300 bis 320 mm, ausgelegt sein kann. Die zweite Federstufe B kann für einen Federweg im Bereich von 50 bis 80 mm, insbesondere 60 bis 70 mm, ausgelegt sein, was in der Praxis für den Ausfederungshub aus der statischen Lage in aller Regel ausreicht.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Federungseinrichtung (1) zur federnden Rad-Abstützung in einem Fahrzeug, bestehend aus einem linear teleskopisch längenvariablen Federzylinder (2) mit zwei in Längsrichtung in Reihe angeordneten Federstufen (A, B), und zwar einem Hauptzylinder (8) als erste Federstufe (A) und einem Zusatzzylinder (10) als zweite Federstufe (B), wobei in dem Zusatzzylinder (10) ein Zusatzkolben (26) mit einer nach außen geführten Zusatzkolbenstange (28) geführt ist, und wobei innerhalb des Zusatzzylinders (10) der Zusatzkolben (26) zum Ausfedern mit einem - von einem zumindest anteilig innerhalb des Zusatzzylinders (10) enthaltenen, elastisch kompressiblen, pneumatischen Druckmedium (DM) erzeugten - Federdruck (p2) beaufschlagt ist,
**dadurch gekennzeichnet, dass** der Zusatzkolben (26) derart mittelbar über ein sich zusätzlich zu dem pneumatischen Druckmedium (DM) innerhalb des Zusatzzylinders (10) befindendes Hydraulikmedium (HM) mit dem Federdruck (p2) beaufschlagt ist, dass zwischen dem Zusatzzylinder (10) und einerseits dem Zusatzkolben (26) und andererseits der Zusatzkolbenstange (28) angeordnete Umfangsdichtungen (30, 38) von dem pneumatischen Druckmedium (DM) über das Hydraulikmedium (HM) getrennt sind.

2. Federungseinrichtung nach Anspruch 1,
**dadurch gekennzeichnet, dass** in einer bestimmungsgemäßen Einbaulage des Federzylinders (2) die erste Federstufe (A) in einem vertikal oberen Bereich und die zweite Federstufe (B) in einem vertikal unteren Bereich angeordnet sind.

3. Federungseinrichtung nach Anspruch 2,
**dadurch gekennzeichnet, dass** innerhalb des Zusatzzylinders (10) ein Füllrohr (40) angeordnet ist, das sich axial durch das sich schwerkraftbedingt in einem unteren Bereich befindende Hydraulikmedium (HM) hindurch mit einem oberen Ende (40a) bis in den Bereich des sich oberhalb des Hydraulikmediums (HM) befindenden pneumatischen Druckmediums (DM) erstreckt, wobei ein unteres Ende (40b) des Füllrohrs (40) in einem im unteren Bereich des Federzylinders (2) vorhandenen Füllanschluss (42) übergeht.

4. Federungseinrichtung nach Anspruch 2 oder 3,
**dadurch gekennzeichnet, dass** der die zweite Federstufe (B) bildende Zusatzzylinder (10) so orientiert ist, dass der Zusatzzylinder (10) der oberen, ersten Federstufe (A) zugewandt ist, wobei sich die Zusatzkolbenstange (28) aus dem Zusatzzylinder (10) nach unten erstreckt und in ihrem freien unteren Bereich bevorzugt mit einem unteren Montageelement (6) zur fahrzeugseitigen Halteverbindung verbunden ist.

5. Federungseinrichtung nach Anspruch 3 oder 4,
**dadurch gekennzeichnet, dass** die Zusatzkolbenstange (28) und gegebenenfalls der Zusatzkolben (26) einen inneren, von dem Füllanschluss (42) ausgehenden und in das auf der Seite des Zusatzkolbens (26) angeordnete Füllrohr (40) übergehenden Füllkanal (44) aufweisen.

6. Federungseinrichtung nach einem der Ansprüche 1 bis 5,
**dadurch gekennzeichnet, dass** innerhalb des Zusatzzylinders (10) durch eine Verengung des inneren Querschnitts eine Ringstufe (48) als Einfederungsanschlag für den Zusatzkolben (26) gebildet ist.

7. Federungseinrichtung nach einem der Ansprüche 1 bis 6,
**dadurch gekennzeichnet, dass** der Zusatzkolben (26) innerhalb des Zusatzzylinders (10) zwei Arbeitsräume (32, 34) voneinander abteilt, und zwar einen dem pneumatischen Druckmedium (DM) zugewandten Zylinderraum (32) von einem die Zusatzkolbenstange (28) umschließenden Ringraum (34), wobei die Arbeitsräume (32, 34) über eine durch den Zusatzkolben (26) verlaufende Passage (50) und/oder über eine hydraulische Dämpfungsventilanordnung (52) hydraulisch verbunden sind.

8. Federungseinrichtung nach einem der Ansprüche 2 bis 7,
**dadurch gekennzeichnet, dass** der die erste Federstufe (A) bildende Hauptzylinder (8) im vertikal oberen Bereich angeordnet ist, wobei in dem Hauptzylinder (8) ein Hauptkolben (12) zum Einfedern und Ausfedern beweglich geführt und mit einer aus dem Hauptzylinder (8) nach unten herausgeführten Hauptkolbenstange (14) verbunden ist.

9. Federungseinrichtung nach Anspruch 8,
**dadurch gekennzeichnet, dass** die Hauptkolbenstange (14) im Bereich ihres freien unteren Endes mit dem Zusatzzylinder (10) verbunden oder durch eine ausgehend vom freien unteren Ende hohle Ausbildung unmittelbar als der den Zusatzkolben (26) mit der Zusatzkolbenstange (28) aufnehmende Zusatzzylinder (10) ausgebildet ist.

10. Federungseinrichtung nach Anspruch 8 oder 9,
**dadurch gekennzeichnet, dass** der Hauptkolben (12) innerhalb des Hauptzylinders (8) zwei mit einem Hydraulikmedium gefüllt Arbeitsräume (16, 18) voneinander abteilt, und zwar einen oberen Zylinderraum (16) von einem die Hauptkolbenstange (14) umschließenden Ringraum (18), wobei die Arbeitsräume (16, 18) hydraulisch insbesondere über eine Dämpfungsventilanordnung (22) miteinander verbunden sind.

11. Federungseinrichtung nach Anspruch 10,
**dadurch gekennzeichnet, dass** der Hauptkolben (12) zum Ausfedern mit einem Federdruck (p1) eines hydropneumatischen Druckspeichers (24) beaufschlagt ist, wozu vorzugsweise der Zylinderraum (16) hydraulisch mit dem Druckspeicher (24) verbunden ist.

12. Federungseinrichtung nach einem der Ansprüche 1 bis 11,
**gekennzeichnet durch** eine an eine den Federzylinder (2) beaufschlagende Gewichtskraft (FG) derart angepasste Auslegung der wirksamen Druck- und Flächenverhältnisse der beiden Federstufen (A, B), dass in einer statischen, mit der Gewichtskraft (FG) beaufschlagten Lage einerseits die erste Federstufe (A) in einer Ausfederungsendstellung und andererseits die zweite Federstufe (B) in einer Einfederungsendstellung stehen, so dass ausgehend von der statischen Lage ein dynamisches Einfedern nur in der ersten Federstufe (A) erfolgt, während ein dynamisches Ausfedern nur in der zweiten Federstufe (B) erfolgt.

## Claims

1. A suspension system (1) for a resilient wheel support in a motor vehicle, consisting of a linear telescopic spring cylinder (2) of variable length for compression and decompression purposes, having two spring stages (A, B) arranged longitudinally in a row, namely one main cylinder (8) as a first spring stage (A) and an auxiliary cylinder (10) as a second spring stage (B), an auxiliary piston (26) being guided outward by an auxiliary piston rod (28), and the auxiliary piston (26) inside the auxiliary cylinder (10) being acted upon by a spring pressure (p2) - generated by an elastically compressible, pneumatic pressure medium (PM) contained at least proportionally in the auxiliary cylinder (10) - for decompression.
**characterized in that** the auxiliary piston (26) is indirectly acted upon by the spring pressure (p2) via an hydraulic medium (HM) situated inside the auxiliary cylinder (10) in addition to the pneumatic pressure medium (PM), that peripheral seals (30, 38) arranged between the auxiliary cylinder (10) and the auxiliary piston (26), on the one hand, and the auxiliary piston rod (28), on the other hand, are separated from the pneumatic pressure medium (PM) via the hydraulic medium (HM).

2. The suspension system according to claim 1,
**characterized in that** the first spring stage (A) is arranged in an upper vertical area and the second spring stage (B) in a lower, vertical area in the conventional mounting position of the spring cylinder (2).

3. The suspension system according to claim 2,
**characterized in that** inside the auxiliary cylinder (10) there is arranged a filling pipe (40) and an upper end (40a) thereof extends axially through the hydraulic medium (HM) situated in a lower area due to gravity, and extends into the area of the pneumatic pressure medium (PM) situated above the hydraulic medium (HM), wherein a lower end (40b) of the filling pipe (40) merges into the filling connector (42) present in the lower area of the spring cylinder (2).

4. The suspension system according to claim 2 or 3,
**characterized in that** the auxiliary cylinder (10) forming the second spring stage (B) is aligned such that the auxiliary cylinder (10) faces the upper, first spring stage (A), the auxiliary piston rod (28) extending downward from the auxiliary cylinder and being preferably connected in its free lower area to a lower mounting element (6) for a vehicle-side holding connection.

5. The suspension system according to claim 3 or 4,
**characterized in that** the auxiliary piston rod (28) and, if applicable, the auxiliary piston (26) has an inner filling channel (44) starting at the filling connector (42) and merging into the filling pipe (40) arranged on the side of the auxiliary piston (26).

6. A suspension system according to any one of claims 1 to 5, **characterized in that** an annular step (48) is formed as a jounce bumper for the auxiliary piston (26) due to a reduction of the inner cross-section inside the auxiliary cylinder (10).

7. A suspension system according to any one of claims 1 to 6, **characterized in that** the auxiliary piston (26) inside the auxiliary cylinder (10) separates two working chambers (32, 34) from one another, namely a cylinder chamber (32) facing the pneumatic pressure medium (PM) from an annular chamber enclosing the auxiliary piston rod (28), both working chambers (32, 34) being hydraulically connected via a passage (50) passing through the auxiliary piston (26) and/or via a hydraulic damping valve arrangement (52).

8. A suspension system according to any one of claims 2 to 7, **characterized in that** the main cylinder (8) forming the first spring stage (A) is arranged in the upper vertical area, a main piston (12) for compression and decompression purposes being displaceable in the main cylinder (8) and connected to a main piston rod (14) protruding downward from the main cylinder (8).

9. The suspension system according to claim 8,
**characterized in that** the main piston rod (14) in the area of the free lower end thereof is connected to the auxiliary cylinder (10), or due to a hollow formation starting at the free lower end thereof, said main piston rod is designed as auxiliary cylinder (10) directly accommodating the auxiliary piston (26) with the auxiliary piston rod (28).

10. The suspension system according to claim 8 or 9,
**characterized in that** the main piston (12) inside the main cylinder (8) separates from one another two working chambers (16, 18) filled with a hydraulic medium, namely an upper cylinder chamber (16) from an annular chamber (18) enclosing the main piston rod (14), the working chambers (16, 18) being hydraulically connected to one another, in particular via a damping valve arrangement (22).

11. The suspension system according to claim 10,
**characterized in that** the main piston (12) is acted upon by a spring pressure (p1) of a hydropneumatic pressure accumulator (24) for decompression, the cylinder chamber (16) being preferentially hydraulically connected to the pressure accumulator (24) for this purpose.

12. A suspension system according to any one of claims 1 to 11, **characterized by** a design of the effective pressure- and area ratio of both spring stages (A, B) adapted to a weight (FG) acting upon the spring cylinder (2) such that in a static position acted upon by the weight (FG), on the one hand the first spring stage (A) is in the decompressed position, and additionally the second spring stage (B) is in a compressed end position, so that starting at the static position, the dynamic compression only occurs at the first spring stage (A) while the dynamic decompression only occurs at the second spring stage (B).

## Revendications

1. Dispositif d'amortissement (1) pour l'appui de roue à ressorts dans un véhicule, se composant d'un cylindre à ressort (2) de longueur variable, télescopique linéairement avec deux étages de ressort (A, B) disposés en série dans le sens longitudinal, à savoir un cylindre principal (8) comme premier étage de ressort (A) et un cylindre supplémentaire (10) comme second étage de ressort (B), dans lequel un piston supplémentaire (26) avec une tige de piston supplémentaire (28) guidée vers l'extérieur est guidé dans le cylindre supplémentaire (10), et dans lequel le piston supplémentaire (26) est sollicité dans le cylindre supplémentaire (10) pour la détente par une pression de ressort (p2) générée par un agent de pressurisation (DM) pneumatique, élastiquement compressible, contenu au moins proportionnellement dans le cylindre supplémentaire (10),
**caractérisé en ce que** le piston supplémentaire (26) est indirectement sollicité par la pression de ressort (p2) par le biais d'un agent hydraulique (HM) se trouvant, outre l'agent de pressurisation (DM) pneumatique, dans le cylindre supplémentaire (10), **en ce que** des garnitures périphériques (30, 38) disposées entre le cylindre supplémentaire (10) et d'un côté le piston supplémentaire (26) et de l'autre côté la tige de piston supplémentaire (28) sont séparées de l'agent de pressurisation (DM) pneumatique par l'agent hydraulique (HM).

2. Dispositif d'amortissement selon la revendication 1,
**caractérisé en ce que** dans une position d'installation conforme aux dispositions du cylindre à ressort (2), le premier étage de ressort (A) est disposé dans une zone verticalement supérieure et le second étage de ressort (B) dans une zone verticalement inférieure.

3. Dispositif d'amortissement selon la revendication 2,
**caractérisé en ce qu'**un tube de remplissage (40) est disposé dans le cylindre supplémentaire (10), lequel tube s'étend axialement au travers de l'agent hydraulique (HM) se trouvant en raison de la force de gravité dans une zone inférieure, avec une extrémité supérieure (40a) jusque dans la zone de l'agent de pressurisation (DM) pneumatique se trouvant au-dessus de l'agent hydraulique (HM), une extrémité inférieure (40b) du tube de remplissage (40) passant dans un raccord de remplissage (42) présent dans la zone inférieure du cylindre à ressort (2).

4. Dispositif d'amortissement selon la revendication 2 ou 3,
**caractérisé en ce que** le cylindre supplémentaire (10) formant le second étage de ressort (B) est orienté de sorte que le cylindre supplémentaire (10) soit tourné vers le premier étage de ressort (A) supérieur, dans lequel la tige de piston supplémentaire (28) s'étend depuis le cylindre supplémentaire (10) vers le bas et est de préférence reliée dans sa zone inférieure libre à un élément de montage inférieur (6) pour la liaison de retenue côté véhicule.

5. Dispositif d'amortissement selon la revendication 3 ou 4,
**caractérisé en ce que** la tige de piston supplémentaire (28) et éventuellement le piston supplémentaire (26) présentent un canal de remplissage (44) intérieur, sortant du raccord de remplissage (42) et passant dans le tube de remplissage (40) disposé sur le côté du piston supplémentaire (26).

6. Dispositif d'amortissement selon l'une quelconque des revendications 1 à 5, **caractérisé en ce qu'**un étage annulaire (48) est formé comme butée de débattement pour le piston supplémentaire (26) dans le cylindre supplémentaire (10) par un rétrécissement de la section transversale intérieure.

7. Dispositif d'amortissement selon l'une quelconque des revendications 1 à 6, **caractérisé en ce que** le piston supplémentaire (26) sépare deux espaces de travail (32, 34) l'un de l'autre dans le cylindre supplémentaire (10), à savoir un espace de cylindre (32) tourné vers l'agent de pressurisation pneumatique (DM) d'un espace annulaire (34) entourant la tige de piston supplémentaire (28), dans lequel les espaces de travail (32, 34) sont reliés hydrauliquement par un passage (50) s'étendant au travers du piston supplémentaire (26) et/ou par un ensemble de soupape d'amortissement (52) hydraulique.

8. Dispositif d'amortissement selon l'une quelconque des revendications 2 à 7, **caractérisé en ce que** le cylindre principal (8) formant le premier étage de ressort (A) est disposé dans la zone verticalement supérieure, dans lequel un piston principal (12) est guidé de manière mobile dans le cylindre principal (8) pour le débattement et la détente et étant relié à une tige de piston principale (14) guidée hors du cylindre principal (8) vers le bas.

9. Dispositif d'amortissement selon la revendication 8,
**caractérisé en ce que** la tige de piston principal (14) est reliée dans la zone de son extrémité inférieure libre au cylindre supplémentaire (10) ou est directement réalisée par une réalisation creuse à partir de l'extrémité inférieure libre comme le cylindre supplémentaire (10) recevant le piston supplémentaire (26) avec la tige de piston supplémentaire (28).

10. Dispositif d'amortissement selon la revendication 8 ou 9,
**caractérisé en ce que** le piston principal (12) sépare deux espaces de travail (16, 18) remplis d'un agent hydraulique l'un de l'autre dans le cylindre principal (8), à savoir un espace de cylindre supérieur (16) d'un espace annulaire (18) entourant la tige de piston principal (14), dans lequel les espaces de travail (16, 18) sont reliés entre eux hydrauliquement notamment par un ensemble de soupape d'amortissement (22).

11. Dispositif d'amortissement selon la revendication 10,
**caractérisé en ce que** le piston principal (12) est sollicité pour la détente par une pression de ressort (p1) d'un accumulateur de pression (24) hydropneumatique, pour quoi l'espace de cylindre (16) est de préférence relié hydrauliquement à l'accumulateur de pression (24).

12. Dispositif d'amortissement selon l'une quelconque des revendications 1 à 11, **caractérisé par** une conception adaptée à une force de poids (FG) sollicitant le cylindre à ressort (2) des rapports de pression et de surface utiles des deux étages de ressort (A, B) de telle manière que dans une position statique sollicitée par la force de poids (FG), d'une part le premier étage de ressort (A) se trouve dans une position finale de détente et d'autre part le second étage de ressort (B) se trouve dans une position finale de débattement de sorte qu'à partir de la position statique, un débattement ne soit effectué que dans le premier étage de ressort (A), alors qu'une détente dynamique n'est effectuée que dans le second étage de ressort (B).
